Europäisches Patentamt

European Patent Office

Office européen des brevets

(11) Publication number: **0 242 210**
**A2**

## EUROPEAN PATENT APPLICATION

(21) Application number: **87303346.8**

(22) Date of filing: **15.04.87**

(51) Int. Cl.⁴: **A 01 K 69/00**

(30) Priority: **16.04.86 GB 8609265**

(43) Date of publication of application:
**21.10.87 Bulletin 87/43**

(84) Designated Contracting States: **ES FR GR IT**

(71) Applicant: **Ashworth, Nicholas John**
**Stoverlake Ashford**
**Aveton Gifford Kingsbridge Devon TQ7 4NL (GB)**

**Ashworth, Eileen Florence**
**Stoverlake Ashford**
**Aveton Gifford Kingsbridge Devon TQ7 4NL (GB)**

(72) Inventor: **Ashworth, Nicholas John**
**Stoverlake Ashford**
**Aveton Gifford Kingsbridge Devon,TQ7 4NL (GB)**

(74) Representative: **Harrison, Ivor Stanley et al**
**Withers & Rogers 4 Dyer's Building Holborn**
**London EC1N 2JT (GB)**

(54) Shellfish trap insert.

(57) A shellfish trap has an entrance throat (3) and an annular plastics insert (5) releasably engaged in the throat and provided with two flaps (7) in the form of branched stems extending across the ring (6) constituting the body of the insert at its end furthest within the pot. The flaps (7) each have a releasable hinge connection (30, 32) to the ring (6) and can be pushed open to let a fish into the pot but are biased by a leaf spring (38) to close behind it to prevent its leaving, the free ends of the flap branches abutting end surfaces (l3, l4) of the insert to prevent pivoting beyond the closed position.

FIG 3

## Description

### Shellfish Trap Insert

This invention relates to an insert for a shellfish trap of the type comprising a pot which is normally weighted so as to rest on the sea bed and which has an entrance throat through which fish enter the pot.

It is known to provide an insert for the throat of a shellfish trap, comprising a mounting ring adapted to be fitted into and to be releasably retained in the throat, and at least one integral, hinged flap attached to the mounting ring and extending across the ring so that, when the insert is fitted, the or each flap can be pushed open by a fish entering the trap but closes to prevent a fish leaving the trap.

Such inserts overcome some of the drawbacks of flaps attached directly to pot entrance throats which lie mainly in the difficulties of applying bait to the throat and of fitting the throat to a pot, the cost and ineffectiveness of the throat, and the loss of rigidity caused by the presence of the flaps.

The attachment of the flaps to a releasable mounting ring facilitates the removal of trapped fish, as well as the replenishment of bait in the pot before the trap is returned to the sea bed.

It has been found in practice, however, that integral hinges, which are necessarily constituted by relatively thin areas of plastics material, are not sufficiently strong to withstand the wear and tear to which they are subjected in a marine environment, both due to waves and larger fish or shellfish. They thus break after a relatively short period of use so that the fisherman not only loses his catch but also has the expense of replacing the insert.

The use of integral hinges also has the drawback that, when it is wished to change the flaps in a shellfish pot, it is necessary to replace the entire insert, comprising the mounting ring and the flaps.

The object of the present invention is therefore to provide a more cost-effective shellfish trap insert than those previously available and accordingly, there is provided a shellfish trap insert similar to that described above but in which independent spring biasing means are provided for biasing the or each flap into its closed position.

The use of separate springs, which may for example be of the helical or leaf type, enables the attachment of the flap to the insert, and also the spring biasing force to be strengthened compared with the previous inserts mentioned above so that the inserts may have a much longer and more effective working life. Preferably each flap is releasably attached to the mounting ring so that flaps can be readily and economically interchanged for different uses. In some cases, indeed, it is preferable to have no flaps in the insert in which case the flap mountings on the ring may be used for the attachment of other fishing tackle, if required.

The or each flap of the insert of the invention is preferably of the type comprising a stem releasably hinged at one end to the mounting ring and having fingers branching from it towards the periphery of the ring. In the known inserts with flaps of this type, the fingers terminate short of the mounting ring and it has been found that some fish can force the fingers apart or force themselves between the ends of the fingers and the ring so as to escape from the trap, sometimes damaging the insert in the process. In embodiments of the present invention this problem may be reduced by the extension of some of the fingers and/or the flap stem to the outer periphery of the ring so that the fingers abut the end surface of the ring in the closed condition of the trap. It will be appreciated that this abutment prevents pivoting of the flap into the ring so that stops previously provided to prevent this pivoting may be omitted.

The mounting ring of the insert is preferably resiliently deformable and snap-engageable with a shellfish pot throat and it may be moulded from plastics material. Hinge members for the flaps may be moulded integrally with the mounting ring or as separate members engageable with the ring.

The flaps are preferably also moulded from plastics material and may be snap engageable with the mounting ring hinge members.

The invention also comprises a mounting ring for the throat of a shellfish trap, the ring being adapted to be fitted into and to be releasably retained in the throat and having attachment means for the releasable attachment at least one flap for extending across the ring to allow entry of a fish to the trap but to prevent its leaving, in use.

The invention will now be further described, by way of example with reference to the appended drawings, in which:

Figure I is a diagrammatic perspective view of one form of shellfish trap of the kind to which the present invention may be applied;

Figure 2 is a sectional view of a throat equipped with an insert according to one embodiment of the invention for use in a shellfish trap of the kind shown in Figure I, taken on the line II-II of Figure 3;

Figure 3 is an under plan view in the direction of arrow III in Figure 2;

Figure 4 is a sectional view of a detail of the throat and insert of Figures 2 and 3;

Figure 5 is a partial top plan view showing a second embodiment of an insert of the invention, taken in a direction corresponding to arrow V in Figure 2;

Figure 6 is a partial cross-sectional view taken on line VI-VI of Figure 5; and

Figure 7 is a partial plan view similar to Figure 5 showing a third embodiment of the insert of the invention.

The shellfish trap shown in Figure I is one of a number of commonly used types and comprises a pot I having a frame which may be made from plastics-coated steel rod or wood, or, as in the illustrated example, from moulded plastics. In use, the pot frame is covered by a net (not shown). The pot I has a base 2, in this example, circular, to which weights (not shown) are attached so that, in use, the pot rests on the sea bed on its base.

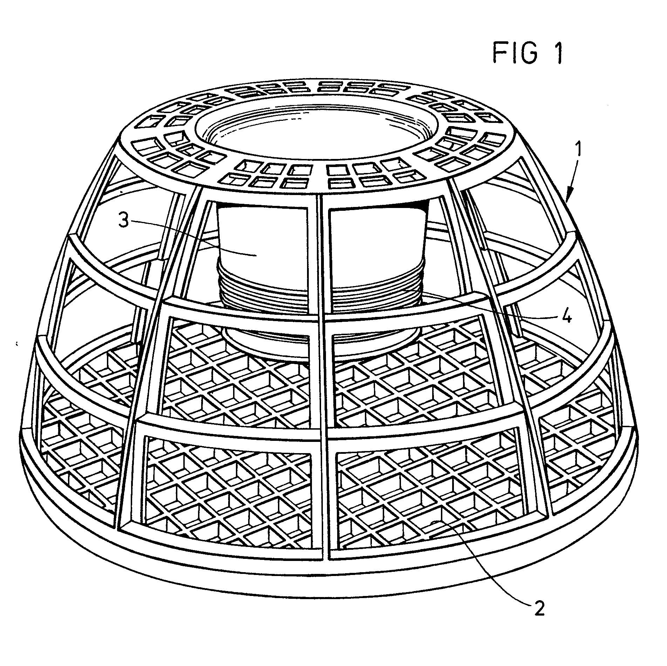

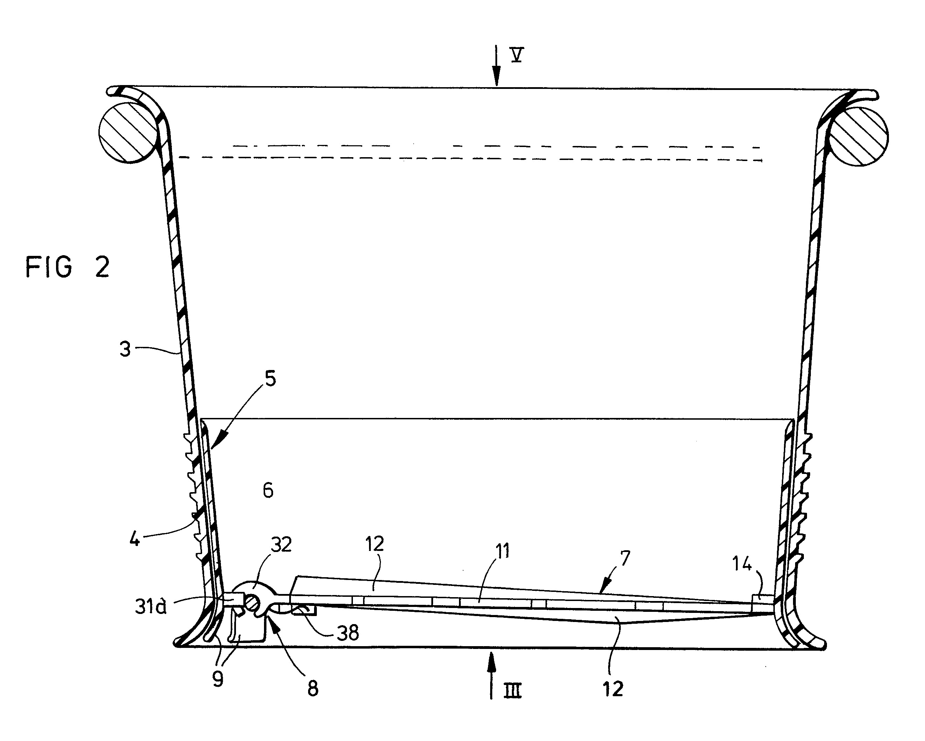

The pot I has a circular aperture at its upper end, opposite the base 2, and an entrance throat 3 is fixed in this aperture so that the throat 3 projects into the pot, its inner end being spaced some distance from the base 2. The entrance throat 3 is, in this example, of moulded plastics construction and has a frusto-conical shape tapering towards its inner (lower) end and flared outwardly at both ends to define respective mouths, the mouth at the outer end of the throat 3 being of larger diameter than the mouth at the inner end of the throat 3, as shown clearly in Figure 2.

The outer surface of the moulded throat 3 is formed with a number of circumferential and axially-spaced-apart ribs 4. These ribs facilitate the attachment of bait (not shown) to the external surface of the throat 3, with the use of rubber or elastic bands, or cords, which are retained in position on the throat by the ribs 4.

When the trap is in use, shellfish such as lobsters and crabs enter the pot I through the throat 3 in order to take the bait supported within the pot I on the outside of the throat 3. Having taken the bait the shellfish cannot easily leave through the throat 3 and remain trapped within the pot I. Over a period of time, however, particularly if the trap is left on the sea bed for longer than usual, for example during stormy weather, trapped shellfish will eventually escape from the pot I through the throat 3.

In order to prevent the escape of trapped fish from the pot I the throat 3 is fitted with an insert generally indicated 5, also of plastics material, one form of which is shown in Figures 2,3 and 4. The insert 5 consists of a frusto-conical mounting ring 6 and one or more (in this example two) flaps 7 extending across the narrower end of the ring and releasably attached thereto by means of respective hinges generally indicated 8.

The frusto-conical shape and size of the mounting ring 6 matches that of the inner end of the throat 3, so that the mounting ring 6 can fit snugly within the throat 3. The mounting ring has, moreover, four outwardly-flared tabs 9 at its end to which the flaps 7 are attached which match the internal surface of the outwardly flared mouth at the inner end of the throat 3, so that, when the ring 6 has been fitted into the throat 3, it is effectively retained therein by the tabs 9, as shown in Figure 2. The mounting ring 6, being moulded in resilient plastics material, can easily be inserted into the throat 3, through its wider end so that the tabs 9 snap-engage with the flared inner end of the throat 3.

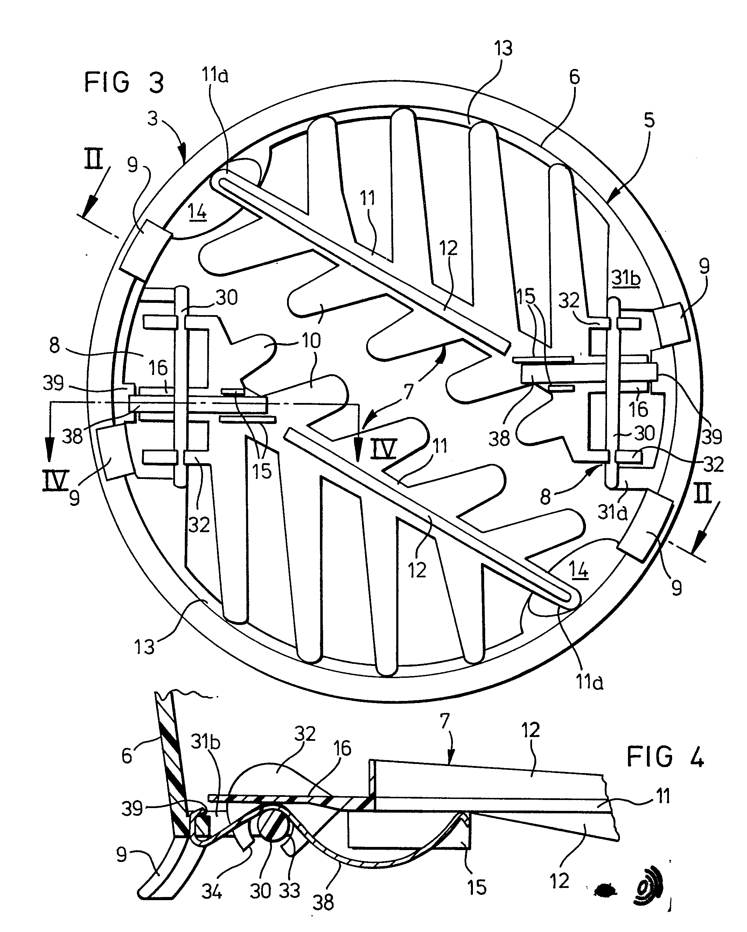

Turning now to the flaps 7 and their hinges 8, the ring 6 is moulded with two integral, cylindrical pivot bars 30 extending along diametrally-opposed chords of the ring and each supported at respective ends by an integral strengthening strut 31a and a shoulder 31b. Each flap 7 is formed with a stem II and branching fingers I0, which will be described more fully below, but, for engagement with the bar 30, has two spaced-apart lugs 32 at the base of the stem II. The lugs 32 have coaxial, cylindrical through-holes 33 of slightly larger diameters than the bar 30 with a recess 34 opening into each through-hole 33. The resilience of the plastics material from which the flaps 7 are made is such that the lugs 32 can be snap-engaged with the bar 30, the bar entering the through-holes 33 through the recesses 34 to the captive position shown most clearly in Figure 4.

It will be appreciated that each flap 7 is pivotable relative to the ring 6 about its hinge bar 30 but it is normally held in the position shown in the drawings, in which it extends across the ring 6, by a leaf spring 38, preferably of stainless steel but, in any case, of a material which is resistant to a sea-water environment. Each spring 38 is captive at one end in a lug 39 formed integrally with the ring 6, extends underneath the respective hinge bar 30, and bears at its opposite end 39 against the underside of the stem II of the flap 7 so as to bias the flap 7 upwardly.

As mentioned above, each flap 7 comprises a stem II and fingers I0. The two stems II extend from their hinges 8 across the ring 6, substantially along parallel chords of the ring, at angles typically of about 60° to the hinge bars 30 (Figure 3). Reinforcing ribs I2 are provided along the stems II, in this case along both the upper and lower surfaces.

The pattern of the fingers I0 is such that they cover substantially the entire area within the ring 6 so as to close its aperture, and hence the mouth of the throat 3, and their free ends I0a project to the outer edge of the ring 6 and abut its lower end surface, indicated I3. This abutment prevents the flaps 7 from pivoting into the ring 6 from the closed position shown in the drawings. This effect is further enhanced by the provision of two tabs I4 projecting from the inner surface of the ring 6 for abutment each by a free end and end finger IIa of a respective stem II.

In use of the lobster pot of Figure I fitted with the throat 3 and insert 5 of Figures 2 to 4, a fish can push the flaps 7 downwardly against the force exerted by the biasing leaf springs 38 to enter the pot. The flaps 7 may in fact pivot from their closed positions through nearly I80° until they abut the throat 3.

Once a fish has passed through the flaps, the springs 38 will return them to their closed position to prevent its escape. The seating of the ends of the fingers I0 and of the stems II against the lower end surface I3 and tabs I4, together with the reinforcement provided by the ribs I2, helps to prevent stronger fish from bending the fingers II or forcing them apart so as to effect their escape.

Each leaf spring 38 is also protected by the provision of two retaining walls I5 projecting from the underside of the respective stem II, one on either side of the spring, and by a guard plate I6 projecting from the stem II towards the lug 39 to which the spring is attached, such that the upper surface of the spring 38 is almost completely covered.

When it is wished to remove a fish trapped in the pot I, the insert 5 can easily be removed by the fisherman as a complete unit. For this purpose it is simply necessary to pull on the mounting ring 6 in order to remove it through the wider mouth of the throat 3. The withdrawal of the insert 6 is facilitated by means of a draw cord (not shown) anchored at one end to the mounting ring 6. The other end of the draw cord may conveniently be attached to the pot I so as to avoid loss of the insert 5 when it has been removed.

Once the insert 5 has been removed, the smooth internal surface of the throat 3 and its smoothly flared mouth, facilitate the operations of removing trapped fish and replenishing the bait in the pot. Once these operations have been completed the insert 5 can be replaced within the throat 3 and snapped back into its operative position. The trap is then ready for re-use.

For certain fishing operations, for example when fishing "in season" the fisherman may prefer to use the throat 3 without the insert 5. Furthermore, it is an easy matter to provide different inserts 5 for use with the throat 3, having various configurations of flap 7, according to the type of fish to be caught, and the seasonal conditions.

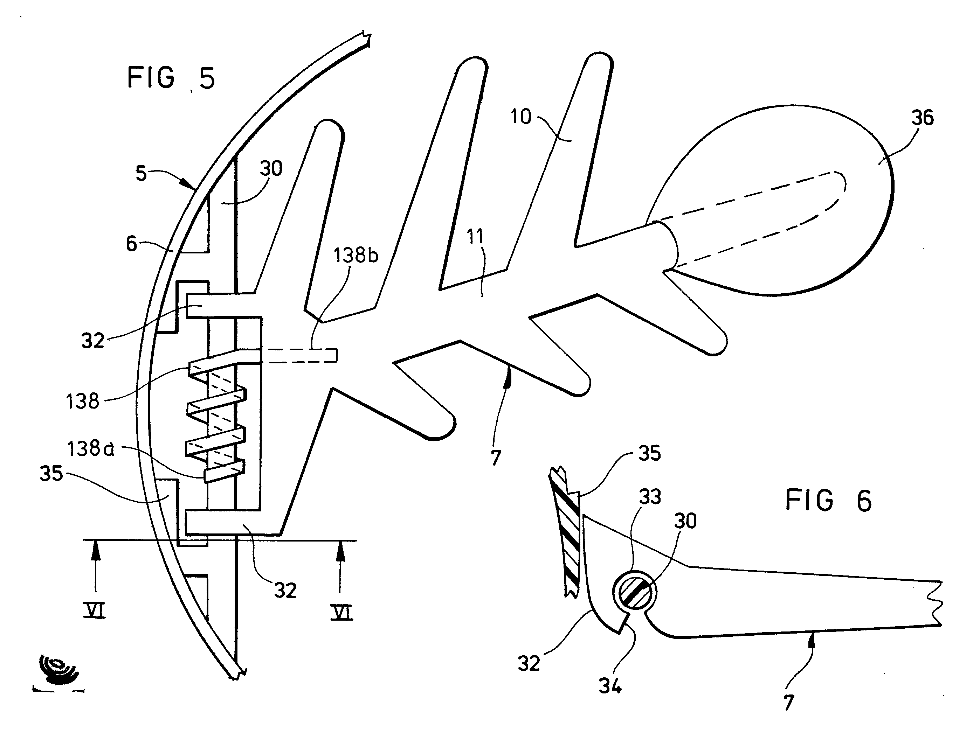

With reference to Figures 5 and 6 of the drawings, a second embodiment of a throat insert is shown generally indicated 5; parts of the insert 5 similar to those of Figures 2 and 3 are indicated by the same reference numerals.

The main difference between this second embodiment and that described above lies in the use of helical torsion springs l38 instead of the leaf springs 38. Each torsion springl38, which may, for example, be of acetal resin or stainless steel, is captive on the respective bar 30 between the two lugs 32, with one endl38a fixed to the bar 30 itself, or alternatively to another part of the ring, and the opposite end l38b bearing on the flap 7 so as to urge it upwardly, into its closed position in use. The fitting and use of the helical spring l38 is not, however, as convenient as that of the leaf spring 38.

A further difference between this embodiment and the embodiment of Figures 2 to 4, lies in the fact that the fingers l0 do not extend quite as far as the ring 6 and the lugs 32 have projections which abut stop surfaces 35 on the ring 6 to prevent pivoting of the flaps 7 upwardly into the ring 6 in use. This form of abutment is not, however, as secure as that of the previous embodiment.

The biasing action of the spring, either of the first or second embodiments described, may be assisted by the attachment of a float to each flap 7.

One possible form of float is shown in Figure 5; this float 36 is generally ovoid in shape and has an axial bore such that it can be pressed on to the free end of the flap stem ll, two end fingers l0 having been removed. The flaps 7 themselves are preferably of a material having substantially the same density as sea water.

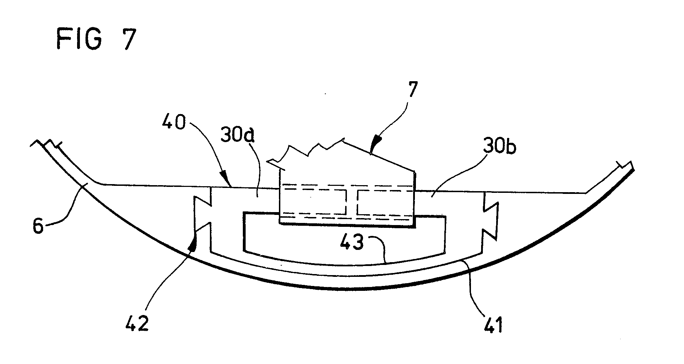

With reference now to Figure 7 of the drawings, an alternative mode of attachment of a flap 7 to a mounting ring 6 is shown, similar features to those of Figures 2 to 4 being indicated by the same reference numerals. For simplicity of illustration, the biasing spring, which may be of the leaf or helical type, has been omitted from the drawing.

Each pivot rod 30 for a flap 7 is in this case provided in the form of two part-rods 30a, 30b projecting from a moulded support generally-indicated 40 which is releasably engaged in a seat 4l moulded with the ring 6. Dove-tail connections 42 of the support 40 with the ring 6 are shown but the interengagement may be of any convenient form.

The important feature of the support 40 is that it includes a resiliently-flexible connection 43 between its two parts supporting the part-rods 30a, 30b. This connection 43 is such that, when the support is fitted into its seat 4l, the connection 43 is curved against the ring l6 and the part-rods 30a, 30b are brought into axial alignment with each other, as shown, trapping the flap 7 on the support. If the support 40 is removed from the seat 4l, however, the flexible connection 43 allows the part-rods 30a, 30b to open apart to allow the flap 7 to be removed and replaced by an alternative flap if desired.

## Claims

l. An insert (5) for the throat (3) of a shellfish trap (l), comprising a mounting ring (6) adapted to be fitted into and to be releasably retained in the throat (3), and at least one hinged flap (7) attached to the mounting ring (6) and extending across the ring so that, when the insert is fitted, the or each flap can be pushed open by a fish entering the trap but closes to prevent a fish leaving the trap, characterised in that spring biasing means (38, l38) are provided for biasing the or each flap (7) into the closed position.

2. An insert according to Claim l, characterised in that the or each flap (7) and the mounting ring (6) have mutually-cooperating, releasably-engageable hinge parts (30, 32).

3. An insert according to Claim 2, characterised in that the mounting ring (6) has a hinge pin (30) for the or each flap extending substantially along a chord of the ring and the flap is formed with an apertured lug (32, 33) engageable with the hinge pin.

4. An insert according to Claim 3, characterised in that the flap lug (32) has a tapering recess (34) opening into the hinge aperture (33) and the hinge pin (30) is snap-engageable in the hinge aperture through the recess.

5. An insert according to any one of the preceding claims, characterised in that the biasing means for the or each flap comprise a leaf spring (38) bearing at one end against a fixed part (39) of the ring and at the other end against the flap (7).

6. An insert according to Claim 3 or Claim 4, characterised in that the biasing means for the or each flap (7) comprise a helical spring (l38) captive on the hinge pin (30) and bearing at one end (l38a) on a fixed part of the ring and at the other end (l38b) against the flap.

7. An insert according to any one of the preceding Claims, characterised in that it has two hinged flaps (7) each comprising a plurality of fingers (l0) branching from a stem (ll), and in that the stems (ll) are hinged each at a respective end to diametrally opposite parts of the mounting ring, the stems extending substantially along parallel chords of the ring.

8. An insert according to Claim 7, in which at least some of the free ends (l0, lla) of the fingers and/or of the stem of each flap abut respective stop surfaces (13, 14) on the mounting ring (6) to prevent the flap from pivoting into the ring beyond closed position.

9. A shellfish trap comprising a pot (1) having an entrance throat (3) and having an insert (5) according to any one of the preceding claims releasably inserted in the throat with the or each flap (7) extending across the throat at the end furthest within the pot.

10. A mounting ring (6) for the throat of a shellfish trap, the ring being adapted to be fitted into and to be releasably retained in the throat and having attachment means (30) for the releasable attachment of at least one flap for extending across the ring to allow entry of a fish to the trap but to prevent its leaving, in use.

0242210

FIG 1

FIG 2

FIG 3

FIG 4

FIG. 5

FIG. 6

# FIG 7